Europäisches Patentamt

European Patent Office

Office européen des brevets

(19)

(11) Veröffentlichungsnummer : **0 334 929 B1**

(12) # EUROPÄISCHE PATENTSCHRIFT

(45) Veröffentlichungstag der Patentschrift :
**15.04.92 Patentblatt 92/16**

(51) Int. Cl.⁵ : **G01B 3/56,** G01B 3/24

(21) Anmeldenummer : **88908662.5**

(22) Anmeldetag : **13.10.88**

(86) Internationale Anmeldenummer :
**PCT/CH88/00189**

(87) Internationale Veröffentlichungsnummer :
**WO 89/03503 20.04.89 Gazette 89/09**

(54) **WINKELMASS MIT ELEKTRONISCHEM MESSWERTGEBER UND DIGITALER ANZEIGE.**

(30) Priorität : **13.10.87 CH 4057/87**
**29.03.88 CH 1183/88**

(43) Veröffentlichungstag der Anmeldung :
**04.10.89 Patentblatt 89/40**

(45) Bekanntmachung des Hinweises auf die
Patenterteilung :
**15.04.92 Patentblatt 92/16**

(84) Benannte Vertragsstaaten :
**AT BE CH DE FR GB IT LI LU NL SE**

(56) Entgegenhaltungen :
**EP-A- 0 198 108**

(56) Entgegenhaltungen :
**DE-A- 3 021 415**
**DE-A- 3 217 424**
**FR-A- 2 456 305**
**US-B- 498 820**

(73) Patentinhaber : **Weber, Hans Rudolf**
**10, chemin du Grillon**
**CH-1007 Lausanne (CH)**

(72) Erfinder : **Weber, Hans Rudolf**
**10, chemin du Grillon**
**CH-1007 Lausanne (CH)**

(74) Vertreter : **Gasser, François W.**
**Patentanwalt und Lizenzberater,**
**Reiterstrasse 5A**
**CH-3013 Bern (CH)**

EP 0 334 929 B1

Jouve, 18, rue Saint-Denis, 75001 PARIS

## Beschreibung

Die vorliegende Erfindung betrifft ein Winkelmass gemäss dem Oberbegriff des Patentanspruchs 1.

Mechanische Winkelmasse oder Rapporteure mit zwei relativ zueinander um eine zentrale Achse verdrehbaren Schenkeln und einer Winkelwertanzeige zwecks Bestimmung des zwischen den Schenkeln eingestellten Winkels sind seit langem bekannt. Sie weisen, zumindest bei Präzisionsinstrumenten, wie beispielsweise aus EP-A3-0 198 108 bekannt, in der Regel eine Nonius-Winkelskala auf, mit welcher der zwischen den beiden Schenkeln eingestellte Winkel bis auf ein Zehntel Grad oder die Minute genau ablesbar ist. Da das Ablesen von solchen Skalen mit ihren vielen relativ nahe beieinander liegenden Mass-Strichen nicht jedermanns Sache ist, führt dies oft zu Fehlmessungen, resp. Fehlablesungen.

Ein diesen Nachteil teilweise überwindender Winkelmesser mit zwei in der relativen Drehlage zu einander verdrehbaren Schenkeln, von denen ein Schenkel das feste, der andere als bewegliche Messschiene ausgebildet ist, wobei der zwischen den beiden Schenkeln eingestellte Winkel auf einer Anzeige ablesbar und mit beiden Schenkeln ein elektrischer Messwertgeber verbunden ist, der seinerseits mit einer Auswertelektronik mit digitaler Winkelwertanzeige und Bedienelementen zusammenwirkt, ist aus der DE-A-32 17 424 bekannt. Bei diesem bekannten Winkelmesser mit elektrischem Messwertgeber und digitaler Anzeige werden nur die durch ein fehlerhaftes Ablesen der Anzeige herrührenden Ablesefehler weitgehend eliminiert, nicht aber auf die Konstruktion des Messwertgebers zurückzuführende Messfehler.

Aus der FR-A-2 456 305 ist eine Drehkondensatorkonstruktion in einem elektrischen Messwertgeber für die Bestimmung der radialen Lage von zwei Teilen relativ zueinander bekannt, mittels welchem Messwertgeber beispielsweise die Einstellung von Autoscheinwerfern in Abhängigkeit der Längsneigung des Fahrzeuges einstellbar ist, welche Konstruktion die Eliminierung gewisser Messfehler ermöglicht, die in elektrischen Messwertgebern durch Krafteinwirkungen von aussen entstehen.

Der vorliegenden Erfindung liegt daher die Aufgabe zugrunde, ein Winkelmass vorzuschlagen, das einerseits das Risiko von Fehlablesungen weitestgehend ausschaltet und den zwischen den Schenkeln eingestellten Winkel in digitaler Form angibt und das sich die heute verfügbaren elektronischen Mittel zur Nullstellung und Messwerttransformation zu Nutze macht.

Erfindungsgemäss wird dies durch ein Winkelmass erreicht, wie es im Patentanspruch 1 definiert ist.

Vorteilhafte Ansgestaltungen entnimmt man der abhängignen Ansprüchen.

Anhand der beiliegenden Zeichnung wird hiernach eine vorteilhafte Ausführungsvariante eines erfindungsgemässen Winkelmasses beschrieben und erläutert, welche konstruktiven Probleme dabei zu lösen waren. In der Zeichnung zeigt

Fig. 1 eine Draufsicht auf ein solches Winkelmass, wobei der verdrehbare Schenkel gegenüber dem festen Schenkel in den acht 45°-Stellungen eines Kreises gestrichelt dargestellt ist,

Fig. 2 einen Schnitt durch einen elektro-mechanischen Messwertgeber, der drehbar rund um die Drehachse des Winkelmasses anzuordnen und vor mechanischen Einwirkungen zu schützen ist, die

Fig. 3a, 3b und 3c die drei Hauptkomponenten des Messwertgebers gemäss Fig. 2, jeweils in Draufsicht,

Fig. 4a einen partiellen Schnitt durch das Winkelmass mit einer ersten Variante einer zentralen Lagerung,

Fig. 4b einen partiellen Schnitt durch das Winkelmass mit einer zweiten Variante einer zentralen Lagerung,

Fig. 5 eine Draufsicht auf ein zentrales Klemmstück im Winkelmass, das die verdrehsichere Blockierung ohne Beeinflussung des elektro-mechanischen Messwertgebers sicherzustellen hat,

Fig. 6 das Klemmstück gemäss Fig. 5 im Schnitt, und

Fig. 7 ein erfindungsgemässes Winkelmass für eine spezielle Anwendung.

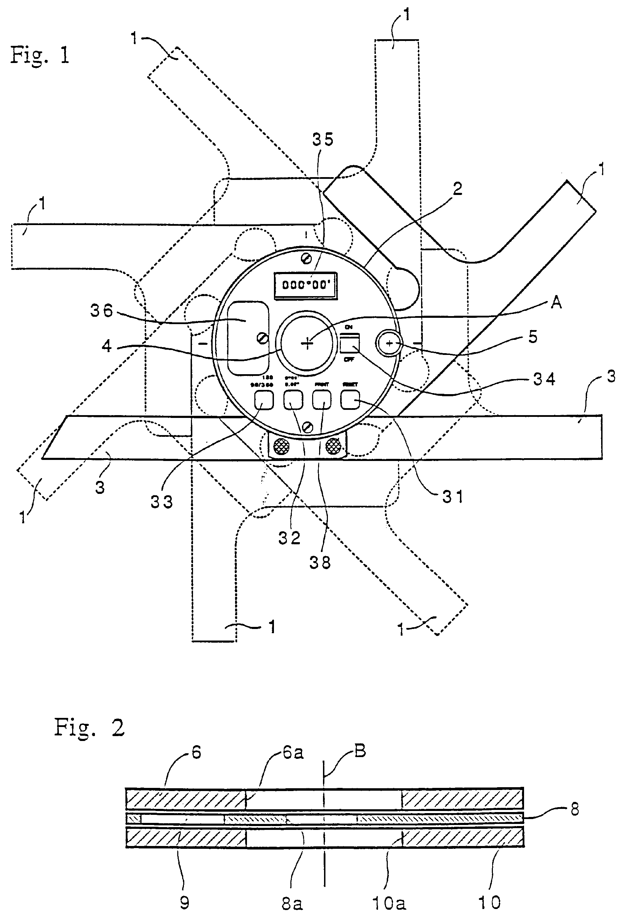

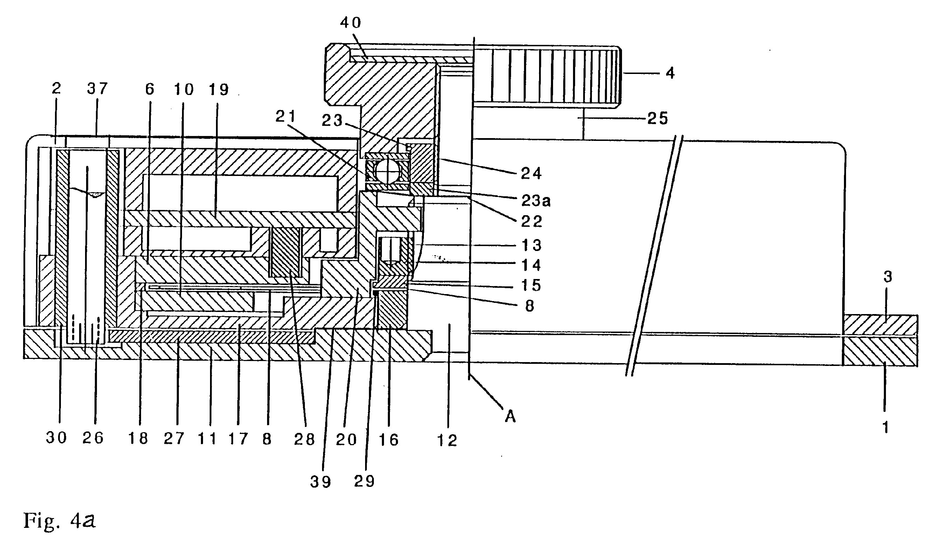

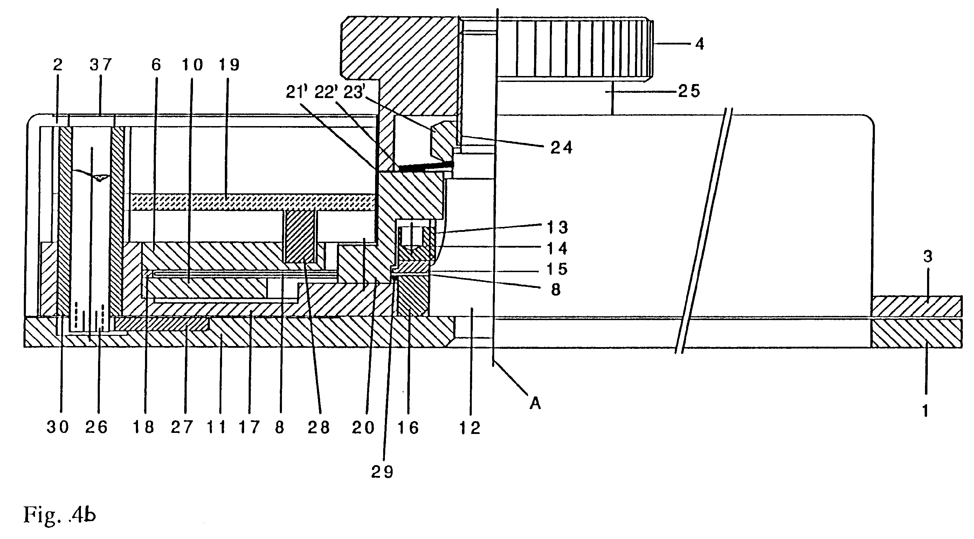

In Fig. 1 erkennt man, dass das erfindungsgemässe Winkelmass bezüglich seiner mechanischen Hauptkomponenten, nämlich einem festen Schenkel 1, der mit einem Boden 11 (Fig. 4) des Winkelmasses entweder fest verbunden oder fest verbindbar ist, einem um eine Drehachse A möglichst spielfrei verdrehbaren beweglichen Schenkel 3, der mit einem Deckel 2 des Winkelmasses verdrehfest verbunden ist, und einer zentralen Feststellmutter 4, einem herkömmlichen mechanischen Winkelmass weitgehend entspricht. Vorteilhafterweise weist es, wie jenes, auch eine über einen Drehknopf 5 betätigbare, weiter unten beschriebene Einrichtung zum präzisen Einstellen kleiner Winkelveränderungen auf. Es ist ferner empfehlenswert, wenn das erfindungsgemässe Winkelmass Mittel aufweist, die die genaue Einstellung der Eichlage, bei der der bewegliche Schenkel 3 genau mit dem festen Schenkel 1 fluchtet, ermöglichen. Die diesbezüglichen Mittel und eventuelle mittel zur Fixierung des beweglichen Schenkels 3 am drehbaren Teil 17 bilden allerdings nicht Gegenstand der vorliegenden Erfindung und werden daher nicht weiter beschrieben.

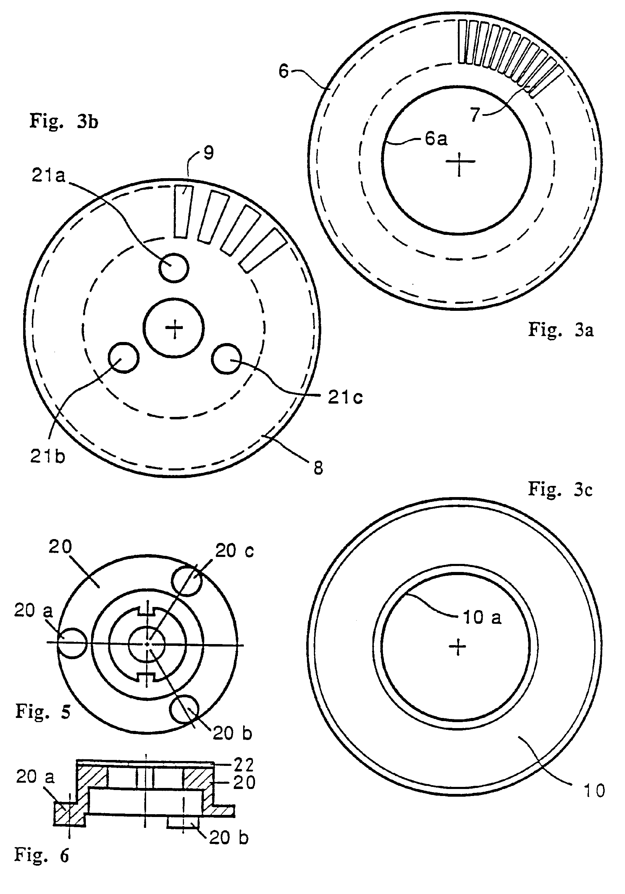

Fig. 2 illustriert grob den Aufbau eines kapazitiven Messwertgebers, wie er im erfindungsgemässen Winkelmass vorteilhaft verwendet wird. Er besteht, neben einer hier nicht näher erläuterten Elektronik, bei einem 3-Scheiben-Modell, im wesentlichen aus einer scheibenförmigen, ein Elektrodenflächen-Muster 7 (Fig.3a) aufweisenden ersten Elektrodenscheibe 6, einem elektrostatischen Schild 8 mit Oeffnungen 9 und einer zweiten, homogenen Elektrodenscheibe 10. Jedes dieser drei scheibenförmigen Kondensator-Elemente 6, 8 und 10 weist ein zentrales Loch 6a, 8a, resp. 10a auf, dessen Funktion weiter unten erläutert werden wird. Durch Verdrehen der Elektrodenscheibe 6 mit dem ElektrodenflächenMuster 7 gegenüber dem Schild 8 um die zentrale Achse A des Messwertgebers, werden in bekannter Art und Weise Kapazitätsänderungen des Messwertgebers erzeugt, aus denen sich die winkelmässig genaue Lage des gedrehten Elementes gegenüber dem feststehenden Element des Kondensators bezüglich einer definierten Ausgangslage errechnen lassen. Die damit zusammenhängende Technik ist bekannt und wird daher hier nicht näher beschrieben.

Alternativ kann an Stelle eines 3-Scheiben-Messwertgebers auch ein solcher mit lediglich zwei Scheiben verwendet werden, bei dem der Schild durch einen passiven elektrostatischen Reflektor ersetzt ist und die homogene Elektrodenscheibe wegfällt, resp. einteilig mit der Elektrodenflächen-Musterscheibe ausgeführt ist.

Es hat sich bewährt und der mit der Arbeit mit den herkömmlichen Winkelmassen vertraute Fachmann ist gewohnt, den mit dem Deckel 2 verbundenen, drehbaren Schenkel 3 möglichst unmittelbar nachdem er ihn in die gewünschte Drehlage gegenüber dem mit einem Boden 11 und einer zentralen Achse 12 (Fig. 4a und 4b) verbundenen festen Schenkel 1 gebracht hat, mittels einer Drehung an der zentralen Feststellmutter 4 bezüglich seiner Drehlage gegenüber dem festen Schenkell, festzulegen. Ein kapazitiver Messwertgeber, wie er hiervor anhand der Fig. 2 und 3a bis 3c beschrieben ist und dessen Elektrodenscheiben 6 und 10 und Schild 8 in axialer Richtung unbeweglich zueinander stehen müssen, da der Luftspalt zwischen diesen Elementen für den Wert der Kapazität des Messwertgebers in jeder Drehlage von grosser Bedeutung ist, darf aber durch das Zusammenpressen der zentralen Teile des Winkelmasses, und damit der Schenkel 1 und 3, durch die Feststellmutter 4 nicht beeinflusst werden. Es gilt demnach, im Rahmen der vorliegenden Erfindung eine konstruktive Lösung vorzuschlagen, die einerseits die bisherige Handhabung eines Winkelmasses für den Fachmann unverändert lässt und die andererseits den speziellen Bedürfnissen der elektromechanischen Elemente des für die digitale Anzeige der Winkel notwendigen kapazitiven Messwertgebers Rechnung trägt.

Aus Fig. 4a erkennt der Fachmann, wie dieses Problem erfindungsgemäss konstruktiv gelöst werden kann. Mit dem Boden 11 ist eine zentrale Achse 12 fest verbunden, z.B. mittels Nietung. Gleichzeitig ist der feste Schenkel 1 des Winkelmasses fest mit diesem Boden 11 verbunden, oder zumindest fest damit verbindbar. Die Achse 12 weist vorteilhafterweise zwei unterschiedliche Gewindeabschnitte auf, von denen der untere Gewindeabschnitt 13 einer ersten Mutter 14 dazu dient, den elektrostatischen Schild 8 mittels einer Zwischenscheibe 15 und einem Zentrierring 16 drehfest mit dem Boden 11 zu verbinden, indem der Schild 8 zwischen Zwischenscheibe 15 und Zentrierring 16 eingeklemmt und diese drei Teile auf den Boden 11 gepresst werden. Damit wird erreicht, dass der Schild 8 bezüglich der Drehachse A des Winkelmasses in einer festen Drehlage gegenüber dem festen Schenkel 1 steht. Er ist auch bezüglich seinem Abstand vom Boden 11 fest positioniert. Spielfrei um die Drehachse A drehbar ist auf dem Zentrierring 16 eine Wanne 17 gelagert, in welche die beiden Elektrodenscheiben 6 und 10, vorteilhafterweise durch einen Distanzring 18 in vorgegebener Distanz zueinander gehalten, verdrehfest eingepasst sind. Der Deckel 2 und eine Auswertelektronik 19 für das Auswerten der Kapazitätswerte und Kapazitätsveränderungen des Messwertgebers (6, 8, 10) bei Gebrauch des Winkelmasses, zusammen mit den in fig. 1 ersichtlichen Anzeige- und Bedienungselementen (35; 31 - 34), sind ebenfalls verdrehfest mit der Wanne 17 verbunden. Wenn der drehbare Schenkel 3gegenüber dem festen Schenkel 1 rund um die Achse A herum verdreht wird, verdrehen sich damit die Wanne 17 und der Deckel 2 mit all den damit verbundenen Teilen gegenüber dem Boden 11 und den damit verbundenen Teilen. Dies bedeutet, dass beim Verdrehen des drehbaren Schenkels 3 gegenüber dem festen Schenkel 1sich die beiden Elektrodenscheiben 6 und 10 gegenüber dem festen Schild 8 um die Achse A verdrehen, was in bekannter Weise zu Kapazitätsveränderungen im Messwertgeber führt, die sich elektronisch in digital anzeigbare Winkelmasse umrechnen lassen.

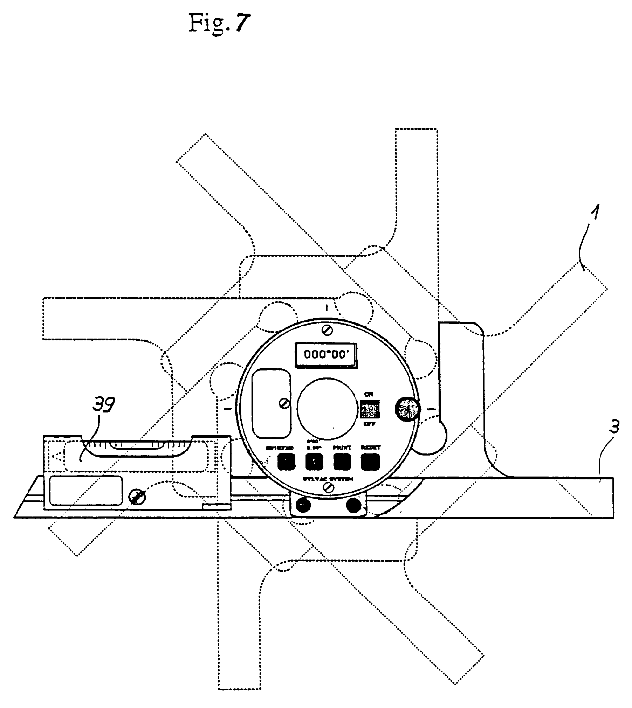

Um zu ermöglichen, dass die Wanne 17 mittels einer Drehung der Feststellmutter 4 verdrehfest gegen den Boden 11 gepresst werden kann, bedarf es eines Klemmstückes 20, wie es beispielsweise in den Fig. 5 und 6 im Detail dargestellt ist. Wie aus Fig. 4 ersichtlich, tritt dieses Klemmstück 20 mit seinen drei Zapfen 20a, 20b und 20c durch die dafür vorgesehenen drei Löcher 21a, 21b und 21c (Fig. 3b) im Schild 8 und stützt sich so auf dem zentralen Teil der Wanne 17 ab. Dadurch dass der Schild 8 verdrehfest mit der Achse 12 verbunden ist, darf sich auch das Klemmstück 20 gegenüber der Achse 12 nicht verdrehen. Um es auch in seiner axialen Lage gegenüber dem Boden 11 zu positionieren, weist es an seinem oberen Ende vorteilhafterweise eine Membran 22 auf, die durch ein axiales Kugellager 21 beaufschlagt ist. Eine zweite Mutter 23, die auf einen oberen Gewindeabschnitt 24 der Achse 12 geschraubt ist, beaufschlagt einen zentralen Klemmring 23a, derart, dass dieser die Membran 22 in ihrem zentralen Bereich fest auf einen darunterliegenden Absatz der Achse 12 presst und gegen jede Verdrehung schützt. Damit wird das Klemmstück 20 wohl verdrehfest mit der Achse 12 verbunden, bleibt aber, dank der Membran 22, die vorteilhafterweise aus federndem Material gefertigt ist, in seiner axialen Lage begrenzt verschiebbar. Der drehbare Schenkel 3 bleibt dadurch gegenüber dem festen Schenkel 1 spielfrei aber nicht ohne ein Minimum an von aussen einwirkendem Drehmoment drehbar, wobei die Schenkel 1 und 3 ruckrei positioniert werden können, ohne dass sie sich unbeabsichtigt gegenüber einander verstellen. Um die Wanne 17 gegenüber dem Boden11, und damit den drehbaren Schenkel 3 gegenüber dem festen Schenkel 1 nach durchgeführter Einstellung des gewünschten Winkels festzulegen und jede axiale Bewegung des Klemmstückes 20 zu unterbinden, genügt es, die Feststellmutter 4 anzuziehen, was bewirkt, dass ein vorteilhafterweise einteilig damit verbundener Ueberwurfring 25 die Wanne 17 kraftschlüssig über das Kugellager 21 und das Klemmstück 20 gegen den Boden 11 presst, bis der mit dem Boden 11 verbundene feste Schenkel 1 und der mit der Wanne 17 verbundene oder verbindbare bewegliche Schenkel 3 verdrehfest gegeneinander blockiert sind. Um die dafür benötigte Klemmkraft möglichst klein zu halten ist es empfehlenswert, im zentralen Bereich des Winkelmasses zwischen dem Boden 11 und der Wanne 17 eine Friktionsscheibe 39 einzulegen. In die Feststellmutter 4 kann in bekannter Weise ein austauschbarer Deckel 40 eingelegt werden.

In einer konstruktiven Variante des zentralen Bereiches kann das Klemmstück 20 gemäss Fig. 4b, um es in seiner axialen Lage gegenüber dem Boden 11 zu positionieren, an seinem oberen Ende durch eine Unterlagscheibe 21' und eine Federscheibe 22', auf die zweite Mutter 23', die auf den oberen Gewindeabschnitt 24 der Achse 12 geschraubt wird, beaufschlagt werden. Je nach dem, wie fest die zweite Mutter 23' angezogen wird, bleibt die zwischen Boden 11 und Klemmstück 20 eingeklemmte Wanne 17 mehr oder weniger frei drehbar. Vorteilhafterweise wird auch bei dieser Konstruktionsvariante darauf geachtet, dass die Wanne 17 gegenüber dem Boden 11, und damit der drehbare Schenkel 3 gegenüber dem festen Schenkel 1, spielfrei aber nicht ohne ein Minimum an von aussen einwirkendem Drehmoment drehbar ist, derart, dass die Schenkel 1 und 3 ruckfrei positioniert werden können, ohne dass sie sich unbeabsichtigt gegenüber einander verstellen. Um die Wanne 17 gegenüber dem Boden 11, und damit den drehbaren Schenkel 3 gegenüber dem festen Schenkel 1 nach durchgeführter Einstellung des gewünschten Winkels festzulegen, genügt es auch bei dieser Konstruktionsvariante, die Feststellmutter 4 anzuziehen, was bewirkt, dass der Ueberwurfring 25 die Wanne 17 kraftschlüssig über das Klemmstück 20 zusätzlich gegen den Boden 11 presst, bis der mit dem Boden 11 verbundene feste Schenkell und der mit der Wanne 17 verbundene oder verbindbare bewegliche Schenkel 3 verdrehfest gegeneinander blockiert sind.

Dank der erfindungsgemässen Konstruktion des Winkelmasses, und dabei insbesondere seines zentralen Bereiches mit der Lagerung der verschiedenen drehbaren Teile, ist es möglich, die bisher übliche Handhabung von Winkelmassen mit Nonius-Anzeigeskalen beizubehalten, ohne dass die im Zentrum vornehmbare axiale Verspannung der einzelnen mechanischen Teile einen Einfluss auf den kapazitiven Messwertgeber haben, obwohl sie durch ihn hindurchtreten.

Die zentralen Löcher 6a und 10a (Fig. 3a und 3c) der beiden Elektrodenscheiben 6 und 10 sind grösser dimensioniert als die Aussendurchmesser der durch sie hindurchtretenden und den Schild 8 und die Wanne 17 festklemmenden Teile. Dadurch ist gewährleistet, dass keine axiale Verschiebung von Wanne 11 und klemmstück 20 relativ zueinander erfolgen kann, so dass die Lage der drei Komponenten des Messwertgebers - die beiden Elektrodenscheiben 6 und 10 und der Schild 8 - in Bezug auf ihre jeweiligen Distanzen zueinander, immer unverändert bleibt. Nur dank der Tatsache, dass dem so ist, beeinflusst das Festklemmen des drehbaren Schenkels 3 auf den festen Schenkel 1 den elektromechanisch ermittelten und elektronisch in eine digitale Anzeige umgewandelten Winkelwert nicht.

Bei Verwendung eines 2-Scheiben-Messwertgebers, bei dem die zweite Elektrodenscheibe 10 wegfällt, kann die Höhe des Winkelmasses reduziert werden. Bei einer solchen Ausführungsvariante wird zudem, wie oben erwähnt, der Schild 8 durch einen passiven elektrostatischen Reflektor ersetzt.

Um das erfindungsgemässe Winkelmass möglichst präzise und mit Feingefühl einstellen zu können, wird es vorteilhafterweise mit einer Feineinstellmechanik versehen, bei der es sich in bekannter Art um einen Drehknopf 5 (Fig. 1) handelt, der ein Ritzel 26, und damit den Deckel 2 mit dem drehbaren Schenkel 3 und die Wanne 17, im Sinne eines Satelliten um einen mit dem Boden 11 verbundenen Zahnkranz 27, und damit den festen Schenkel 1, herumdrehen lässt.

Um die Auswertelektronik 19 mit der das Elektrodenflächen-Muster 7 (Fig. 3a) tragenden Elektrodenscheibe 6 elektrisch zu verbinden, kann ein mit Leiterbahnen versehener Elastomer 28 verwendet werden. Zwecks Sicherstellung des Gegenpoles im Schild 8 ist es zudem vorteilhaft, einen Kontaktring 29 vorzusehen. Zweckmässigerweise wird das Ritzel 26 auch in einer Lagerbüchse 30 gelagert, um sicherzustellen, dass es genau geführt wird und nicht unbeabsichtigterweise mit dem Deckel 2 oder der Auswertelektronik 19 in Berührung kommt.

Der Fachmann erkennt, dass die vorliegende Erfindung in Verbindung mit bekannten technischen Konstruktionen in herkömmlichen Winkelmassen die Realisierung eines neuen Winkelmasses gestattet, das von seiner praktischen Handhabung her jenem entspricht, den eingestellten Winkel aber digital anzeigt. Durch Verwendung einer entsprechenden, an sich bekannten Auswertelektronik 19 ist es auch möglich, jede beliebige Ausgangsstellung der beiden Schenkel 1 und 3 als Eichmass zu definieren, von welchem aus ein Winkel gemessen werden kann. Dies ist in bekannter Art mittels eines "Reset"-Knopfes 31 (Fig. 1) möglich, der die Elektronik auf "Null" setzt. Eine Umwandlung der Anzeige von Grad und Minuten auf Dezimalgrad ist ebenfalls realisierbar und kann mittels Knopfdruck (Knopf 32) leicht realisiert werden. Weitere elektronische Umschaltungen, z.B. eine 90°/180°/360° Umschaltung mittels eines weiteren Knopfes 33, kann ebenfalls vorgesehen werden. Sinnvoll ist es ferner, einen Ein-/Ausknopf 34 vorzusehen, mittels welchem die Auswertelektronik ausgeschaltet werden kann. Als Anzeige 35 wird vorzugsweise eine LCD-Anzeige verwendet. Zwecks einfachem Auswechseln der für den Betrieb der Elektronik und der Anzeige notwendigen Batterie(n) empfiehlt es sich weiter, eine entsprechende Oeffnung mit Abdeckung 36 vorzusehen. Um die notwendigen Angaben bei den diversen Bedienungselementen des neuen Winkelmasses den jeweiligen Gegebenheiten, die von der verwendeten Elektronik abhängen, einfach anpassen zu können, ist es sinnvoll, in den Deckel 2 eine Frontplatte 37 einzusetzen. Es kann ferner sinnvoll sein, das neue Winkelmass mit einem Ausgang für die Ausgabe des Messwertes mittels Druck auf einen entsprechenden Knopf 38 auf einen Computer oder Drucker zu versehen.

Das erfindungsgemässe Winkelmass kann mit weiteren mechanischen und/oder elektronischen Zusätzen versehen werden, um es den Anforderungen des Benützers optimal anzupassen. Es kann in einzelnen Punkten auch anders konstruiert werden als im hiervor beschriebenen vorteilhaften Ausführungsbeispiel mit zwei Konstruktionsvarianten des zentralen Bereiches.

Fig. 7 illustriert eine vorteilhafte Weiterausgestaltung eines Erfindungsgemässen Winkelmasses, bei welchem auf dem drehbaren Schenkel 3 eine Wasserwaage oder Libelle (39) positioniert ist, derart, dass das Winkelmass dazu verwendet werden kann, die Neigung einer Fläche gegenüber der Horizontalen zu messen, ohne dass ein horizontaler Anschlag für den drehbaren Schenkel notwendig wäre.

## Patentansprüche

1. Winkelmass mit zwei in ihrer relativen Drehlage zueinander verdrehbaren Schenkeln (1, 3), von denen ein fester Schenkel (1) fest mit einem Boden (11) des Winkelmasses und ein gegenüber dem festen Schenkel (1) bezüglich einer gemeinsamen Drehachse (A) drehbarer Schenkel (3) fest mit einem Deckel (2) des Winkelmasses verbunden oder verbindbar ist, wobei der zwischen den beiden Schenkeln (1, 3) eingestellte Winkel auf einer Anzeige (35) ablesbar ist, welches Winkelmass auch eine zentrale Feststellmutter (4) aufweist, mittels welcher die beiden Schenkel (1, 3), resp. jeweils damit funktional verbundene Teile gegenseitig verdrehfest festlegbar sind, und dass mit den beiden Schenkeln (1, 3), resp. damit verdrehfest angeordneten oder anordbaren Teilen ein elektrischer Messwertgeber (6, 8, 10) verbunden ist, der seinerseits mit einer Auswertelektronik (19) mit digitaler Winkelwert-Anzeige (35) und Bedienelementen (31, 32, 33, 34) zusammenwirkt, dadurch gekennzeichnet, dass ein durch den Messwertgeber (6, 8, 10) durchgreifendes Klemmstück (20) das gegenseitige Festlegen der beiden Schenkel (1, 3) ohne Beeinflussung des Messwertgebers ermöglicht, derart, dass das Drehen der Feststellmutter (4) eine drehfest mit einem zweiten Teil (6, 10) des Messwertgebers verbundene, spielfrei um eine zentrale Achse (12) drehbare Wanne (17) mittels Zapfen (20a, 20b, 20c) des Klemmstückes (20), die durch dafür vorgesehene Löcher (21a, 21b, 21c) in einem verdrehfest mit der zentralen Achse (12) verbundenen ersten Teil (8) des Messwertgebers (6, 8, 10) hindurchtreten, gegen den Boden (11) gepresst wird, dass am oberen Ende des Klemmstückes (20) vorgesehene Mittel (21, 22, 23, 23a, 24, 21', 22', 23') eine Positionierung des Klemmstückes (20) in seiner axialen Lage gegenüber dem Boden (11) erlauben und dass federnde Mittel (22, 22') eine ruckfreie Positionierung des drehbaren Schenkels (3) gegenüber dem feststehenden Schenkel (1) nicht ohne ein Minimum an von aussen einwirkendem Drehmoment gewährleisten.

2. Winkelmass gemäss Anspruch 1, dadurch gekennzeichnet, dass das erste Teil (8) mittels einem Zentrierring (16) und einer ersten Mutter (14), die auf einen unteren Gewindeabschnitt (13) der zentralen Achse (12) aufschraubbar ist, welche ihrerseits fest mit dem Boden (11) des Winkelmasses verbunden ist und den festen Schenkel (1) trägt, verdrehfest mit dem festen Schenkel (1) verbunden ist, wogegen das zweite Teil (6, 10) über eine Wanne (17) verdrehfest mit dem drehbaren Schenkel (3) verbunden ist.

3. Winkelmass gemäss Anspruch 2, dadurch gekennzeichnet, dass das Klemmstück (20) einerseits durch einstellbare Mittel (21, 25, 4) und andererseits durch Klemmittel (23, 23a), die mit einem oberen Gewindeabschnitt (24) der Achse (12) zusammenwirken, beaufschlagt ist, derart, dass sich die Wanne (17) einerseits in axialer Richtung festklemmbar und andererseits verdrehgeschützt gegenüber dem Boden (11) um eine zentrale Drehachse (A) des Winkelmasses herum, verdrehen lässt.

4. Winkelmass gemäss Anspruch 3, dadurch gekennzeichnet, dass die Klemmittel aus einer zweiten Mutter (23) und einem Klemmring (23a) und die einstellbaren Mittel aus der Feststellmutter (4), einem Ueberwurfring (25) und einem axialen Kugellager (21) bestehen, wobei das Kugellager (21) das Klemmstück (20) beaufschlagt und eine fest mit dem Klemmstück (20) verbundene Membran (22) durch den Klemmring (23a) auf die zentrale Achse (12) verdrehfest klemmbar ist, das Ganze derart, dass einerseits durch das Festklemmen der Membran (22) eine begrenzte axiale Kraft auf das Klemmstück (20) ausgeübt wird und andererseits mittels der Feststellmutter (4) über das Kugellager (21) das Klemmstück (20) so fest gegen die Wanne (17) verdrehfest gegen den Boden (11) des Winkelmasses pressbar ist, dass die beiden Schenkel (1, 3) relativ zueinander verdrehfest blockierbar sind.

5. Winkelmass gemäss Anspruch 2, dadurch gekennzeichnet, dass das Klemmstück (20) durch einstellbare Mittel (21, 22, 23), die mit einem oberen Gewindeabschnitt (24) der Achse (12) zusammenwirken, beaufschlagt ist, derart, dass sich die Wanne (17) spielfrei aber gegen unbeabsichtigtes Verdrehen geschützt, gegenüber dem Boden (11) um eine zentrale Drehachse (A) des Winkelmasses herum, verdrehen lässt.

6. Winkelmass gemäss Anspruch 5, dadurch gekennzeichnet, dass das Klemmstück (20) weiter durch einen Ueberwurfring (25) beaufschlagt ist, der durch die gegebenenfalls einteilig damit verbundene Feststellmutter (4), die auf die zentrale Achse (12) aufschraubbar ist, fest gegen das Klemmstück (20) pressbar ist, derart, dass dieses die Wanne (17) verdrehfest gegen den Boden (11) des Winkelmasses presst, so dass die beiden Schenkel (1, 3) relativ zueinander verdrehfest blockiert werden.

7. Winkelmass gemäss Anspruch 1, dadurch gekennzeichnet, dass auf einem seiner Schenkel (1, 3) eine Libelle (39) befestigt ist, zwecks Bestimmung der Horizontalen.

## Claims

1. Angle measuring gauge with two arms (1, 3) which can rotate in their relative angular position to one another, of which a fixed arm (1) is firmly attached to a base (11) of the angle measuring gauge and a rotating arm (3) which is rotatable with respect to the fixed arm (1) about a common rotational axis (A) is or can be firmly connected to a cover (2) of said angle measuring gauge, where the angle set between the two arms (1, 3) can be read off a display (35), which angle measuring gauge also has a central locking nut (4) by means of which the two arms (1, 3) or components connected functionally with each of them respectively can be locked together in such a way that the said two arms (1, 3) or said components do not rotate relative to one another, and where the two arms (1, 3) or therewith in rotationle relation firmly connected or connectable components are connected to an electric measuring device (6, 8, 10) which for its part operates together with a logic electronics system (19) with a digital angular display (35) and operating elements (31, 32, 33, 34), characterised in that a clamping element (20) which passes through the measuring device (6, 8, 10) enables to lock the two arms (1, 3) together without affecting the measuring device (6, 8, 10) in such a way that the rotation of the locking nut (4) presses a tray (17), which is connected to a second part (6, 10) of the angle measuring gauge in such a way that it cannot rotate relative to it, and which tray (17) is rotatable without clearance about a central shaft (12) to the base (11) by means of pins (20a, 20b, 20c) of the clamping element (2=) which pass through holes (21a, 21b, 21c) provided for that purpose in a first part (8) of the angular measuring device which first part (8) is conneceted in such a way to the central shaft (12) that it cannot rotate relative to it, that means (21, 22, 23, 23a, 24, 21′, 22′, 23′) provided on the upper end of the clamping element (20) allow an axial positionning of the clamping element (20) relatively to the base (11) and that elastic means (22, 22′) allow a smooth positionning of the rotatable arm (3) with respect to the fixed arm (1) when a minimum of external torque is applied.

2. Angle measuring gauge as in Claim 1, characterised in that the first part (8) is connected with the fixed arm (1) in such a way that they cannot rotate relative to one another by means of an eccentric ring (16) and a first nut (14) which can be screwed to a lower threaded section (13) of a central shaft (12) which in turn is firmly connected to the base (11) of the angle measuring gauge and on which the fixed arm (1) is mounted, while the second part (6, 10) is connected with the rotating arm (3) via the tray (17) in such a way that they cannot rotate relative to one another.

3. Angle measuring gauge as in Claim 2, characterised in that on the one hand the clamping element (20) is connencted to adjustable components (21, 25, 4), and, on the other hand, the locking elements (23, 23a), which cooperate with the upper threaded section (24) of the shaft (12), in such a way that the tray (17) can, on the one hand, be clamped in an axial direction and, on the other, can rotate about a central rotational axis (A) of the angle measuring gauge while being protected against rotation relative to the base (11).

4. Angle measuring gauge as in Claim 3, characterised in that the locking elements consist of a second nut (23) and a locking ring (23a), and the adjustable components consist of a locking nut (4), a coupling ring (25) and an axial ball bearing (21), where the ball bearing (21) contacts the clamping element (20), and a membrane (22), which is firmly connected with the clamping element (20), is attachable by means of the locking ring (23a) to the central shaft (12) in such a way that they do not rotate relative to one another, the whole assembly being such that, on the one hand, a limited axial force is exerted on the clamping element (20) by the clamping effect of the membrane (22) and, on the other hand, the clamping element (20) can be pressed so tightly by means of the locking nut (4) against the tray (17) and against the base (11) of the angle measuring gauge that they cannot rotate relative to one another that the two arms (1, 3) can be locked to one another without

EP 0 334 929 B1

relative rotation.

5. Angle measuring gauge as in Claim 2, characterised in that the clamping element (20) is contacted by adjustable components (21, 22, 23) in conjunction with an upper threaded section (24) of the shaft (12), in such a way that the tray (17) can rotate without clearance relative to the base (11) about a central rotational axis (A) of the angle measuring gauge, while being protected against unintentional rotation.

6. Angle measuring gauge as in Claim 5, characterised in that the clamping element (20) is further contacted by a coupling ring (25) which can be pressed tightly against the clamping element (20) by means of a locking nut (4), which may be formed in a single component with said locking ring (25) and which is screwable to the central shaft (12), in such a way that said clamping element (20) presses the tray (17) against the base (11) of the angle measuring gauge such that they cannot rotate relative to one another, in such a way that the two arms (1, 3) are locked together without relative rotation.

7. Angle measuring gauge as in Claim 1, characterised in that a bubble level (39) is connected to one of its arms (1, 3) for the purpose of determining the horizontal.

**Revendications**

1. Goniomètre comportant deux branches (1, 3) susceptibles de tourner l'une par rapport à l'autre dans leur position de rotation relative, l'une des branches étant une branche fixe (1) reliée solidairement au fond (11) du goniomètre et l'autre étant une branche pivotante (3) par rapport à un axe de rotation (4) commun rapporté à la branche fixe (1), cette branche pivotante étant reliée ou suceptible d'être reliée à un couvercle (2) du goniomètre, l'angle formé entre les deux branches (1, 3) pouvant se lire sur un moyen d'affichage (35), ce goniomètre comportant également un écrou central (4) de blocage par lequel les deux branches (1, 3) ou les pièces reliées fonctionnellement à ces deux branches peuvent être bloquées dans leur rotation relative et en ce qu'un générateur électrique de valeur de mesure (6, 8, 10) est relié aux deux branches (1, 3) ou à des pièces reliées ou susceptibles d'être reliées à ces branches, ce générateur coopérant avec un circuit électronique d'exploitation (19) à affichage numérique de l'angle (35) et des éléments de manoeuvre (31, 32, 33, 34), goniomètre caractérisé en ce qu'une pièce de serrage (20) qui traverse le générateur de valeur de mesure (6, 8, 10) permet le blocage réciproque des deux branches (1, 3) sans influencer le générateur de valeur de mesure et en ce que la rotation de l'écrou de blocage (4) presse contre le fond (11) une cuvette (17) reliée de manière solidaire en rotation à une seconde partie (6, 10) du générateur de valeur de mesure, sans jeu autour d'un axe central (12), à l'aide de pattes (20a, 20b, 20c) de la pièce de serrage (20) qui traversent des orifices (21a, 21b, 21c) prévus à cet effet dans une première partie (8) du générateur de valeur de mesure (6, 8, 10) reliée solidairement en rotation à l'axe central (12), et en ce qu'à l'extrémité supérieure de la pièce de serrage (20) se trouvent des moyens (21, 22, 23, 23a, 24, 21', 22', 23') permettant un positionnement de la pièce de serrage (20) dans sa position axiale par rapport au fond (11) et en ce que des moyens élastiques (22, 22') sont prévus pour permettre un positionnement sans à-coups de la branche pivotante (3) par rapport à la branche fixe (1), nécessitant néanmoins un couple extérieur dépassant un minimum.

2. Goniomètre selon la revendication 1, caractérisé en ce que la première partie (8) est reliée solidairement en rotation à la première branche (1) par l'intermédiaire d'un anneau de centrage (16) et d'un premier écrou (14) lui même vissé sur un segment fileté inférieur (13) de l'axe central (12), axe qui est lui-même relié solidairement au fond (11) du goniomètre et porte la branche fixe (1), alors que la seconde partie (6, 10) est reliée à la branche pivotante (3) par l'intermédiaire d'une coupelle solidaire en rotation.

3. Goniomètre selon la revendication 2, caractérisé en ce que la pièce de serrage (20) est sollicitée, d'une part, par des moyens réglables (21, 25, 4) et, d'autre part, par des moyens de serrage (23, 23a) qui coopèrent avec un segment fileté supérieur (24) de l'axe (12) de façon que, d'une part, la cuvette (17) puisse se bloquer dans la direction axiale et que, d'autre part, qu'elle soit protégée en rotation vis-à-vis du fond (11) sur un axe de rotation (A) central autour du goniomètre.

4. Goniomètre selon la revendication 3, caractérisé en ce que les moyens de serrage se composent d'un second écrou (23) et d'une bague de serrage (23a) et les moyens de réglage se composent de l'écrou de réglage (4), d'un écrou chapeau (25) et d'un palier à billes (21) axial, le palier à billes (21) sollicitant le pièce de serrage (20) et une membrance (22) reliée solidairement à la pièce de serrage (20) peut être bloquée solidairement en rotation sur l'axe central (12) par l'anneau de serrage (23a), le tout de façon telle que, d'une part, du fait du serrage de la membrane (22), une force axiale limitée soit exercée sur la pièce de serrage (20) et que, d'autre part, l'écrou de serrage (4) tourne par le palier à billes (21) la pièce de serrage (20) suffisamment solidement contre la cuvette (17) en étant pressé solidairemenmt en rotation contre le fond (11) du goniomètre pour que les deux branches (1, 3) soient bloquées solidairement en rotation l'une par rapport à l'autre.

5. Goniomètre selon la revendication 2, caractérisé en ce que la pièce de serrage (20) peut être sollicitée

par des moyens réglables (21, 22, 23) qui coopèrent avec un segment fileté supérieur (24) de l'essieu (12) de façon que la cuvette (17) soit protégée sans jeu mais contre une torsion excessive accidentelle, par rapport au fond (11), en tournant sur un axe de rotation central (A) du goniomètre.

6. Goniomètre selon la revendication 5, caractérisé en ce que la pièce de serrage (20) est en outre sollicitée par un écrou chapeau (25) qui peut le cas échéant être pressé en une seule pièce par l'écrou de blocage (4) qui lui est relié et qui est vissé sur l'axe central (12), solidement contre la pièce de serrage (20) de manière que cette cuvette (17) presse solidairement en rotation le fond (11) du goniomètre pour que les deux branches (1, 3) soient bloquées dans leur rotation relative.

7. Goniomètre selon la revendication 1, caractérisé en ce qu'un niveau à eau (39) est fixé sur l'une des branches (1, 3) pour déterminer les positions horizontales.

Fig. 1

Fig. 2

Fig. 3b

Fig. 3a

Fig. 3c

Fig. 5

Fig. 6

Fig. 4a

Fig. 4b

Fig. 7